# EUROPEAN PATENT SPECIFICATION

(11) **EP 4 338 883 B1**
(45) Date of publication and mention of the grant of the patent: **06.11.2024**
(21) Application number: 22196079.2
(22) Date of filing: 16.09.2022
(51) Int. Cl.: B23P 19/06, F03D 13/10, F03D 17/00, G01B 11/06, E04H 12/08

(54) **METHOD OF DETECTING A POSITION OF AT LEAST ONE BOLT END OF AT LEAST ONE BOLT**
VERFAHREN ZUR ERFASSUNG EINER POSITION VON MINDESTENS EINEM BOLZENENDE VON MINDESTENS EINEM BOLZEN
PROCÉDÉ DE DÉTECTION D'UNE POSITION D'AU MOINS UNE EXTRÉMITÉ DE BOULON D'AU MOINS UN BOULON

(43) Date of publication of application: 20.03.2024
(73) Proprietor: ADMEDE AB, 211 19 Malmö (SE)
(72) Inventor: JAGD, Lars, 211 15 Malmö (SE); JOHST, Kenneth, 1970 Frederiksberg C (DK); MARINITSCH, Gerald, 8401 Kalsdorf (AT)
(74) Representative: Schwarz & Partner Patentanwälte GmbH

(56) References cited:
- EP-A1- 3 163 071
- WO-A1-2018/103805
- US-A1- 2021 268 614
- SUN JUNHUA ET AL: "A Fast Bolt-Loosening Detection Method of Running Train's Key Components Based on Binocular Vision", IEEE ACCESS, vol. 7, 19 February 2019 (2019-02-19), pages 32227 - 32239, XP011716066, DOI: 10.1109/ACCESS.2019.2900056
- XIE YANXIA ET AL: "On-line bolt-loosening detection method of key components of running trains using binocular vision", PROCEEDINGS OF SPIE; [PROCEEDINGS OF SPIE ISSN 0277-786X VOLUME 10524], SPIE, US, vol. 10605, 15 November 2017 (2017-11-15), pages 1060513 - 1060513, XP060098587, ISBN: 978-1-5106-1533-5, DOI: 10.1117/12.2286728
- GONG HAO ET AL: "Quantitative loosening detection of threaded fasteners using vision-based deep learning and geometric imaging theory", AUTOMATION IN CONSTRUCTION, ELSEVIER, AMSTERDAM, NL, vol. 133, 19 October 2021 (2021-10-19), XP086882603, ISSN: 0926-5805, [retrieved on 20211019], DOI: 10.1016/J.AUTCON.2021.104009
- PARK JAE-HYUNG ET AL: "Vision-based technique for bolt-loosening detection in wind turbine tower", WIND & STRUCTURES, vol. 21, no. 6, 25 December 2015 (2015-12-25), Korea, Republic of, pages 709 - 726, XP093023892, ISSN: 1226-6116, Retrieved from the Internet <URL:https://d1wqtxts1xzle7.cloudfront.net/61258369/WAS_2015_Park20191118-60842-65qv5n.pdf?1574126313=&response-content-disposition=inline;+filename=Vision_based_technique_for_bolt_loosenin.pdf&Expires=1676404641&Signature=IYt0UgbTtDiirGJOxFlzNissCmWDxbpQ-dD2LINvM4qPlK9N5mhbTFpijXQw17l0YrIPRlkQeJEZ8T2Uo6> [retrieved on 20230214], DOI: 10.12989/was.2015.21.6.709

## Description

The present invention is related to a method of detecting a position of at least one bolt end of at least one bolt of a series of bolts arranged in a linear or curved flanged connection, wherein the bolt ends of the bolts arranged in the flanged connection are protruding beyond the flanged connection, with a camera which is movable along the flanged connection.

The invention is furthermore related to a tightening device for tightening a series of nuts pre-screwed on bolts, which bolts are arranged in a linear or in a curved flanged connection, comprising a camera, and a computing unit connected to the camera.

In the field of modern energy production, wind turbines play an essential part to provide renewable, sustainable, and clean energy for the energy market. Wind turbines comprise a tower, on which a rotor is mounted, which is connected to an electric generator. The tower can reach a height of 100 meters, 150 meters, or even more depending on the specific requirements resulting from, among others, the location of the wind turbine. The tower consists of several tube segments with a length of for instance 20 meters or 30 meters. These segments are connected by circular flanged connections on each side of the tube segments. During erection of the wind turbine on site, the tube segments are fitted together and connected with the joint circular flanged connections with bolts and nuts. Large quantities of bolts, typically in the hundreds, of large size are necessary to establish the required stiffness and strength of the connections. In order to achieve the appropriate defined stiffness and strength in the joints, all the bolts have to be bolted down with a predefined preload or torque, and according to a specific bolt tightening pattern.

Previously, this operation was performed manually, using torque wrenches or similar tools. Therefore, the construction of wind turbine towers was very labor intensive. In order to speed up the construction, robots were developed which performed the bolt tightening sequence automatically. Document EP 2 607 685 A1 discloses a robot to bolt down a series of nut bolts in a joint circular flanged connection of a wind turbine. This robot comprises at least two wheels and a drive to transport the robot along the series of nut bolts and a tool to bolt down a nut bolt with a predefined torque. This drive used in this robot is a belt drive, which interacts with a side wall of the tower in order to propel itself forward. In order to achieve enough friction with the side wall, several electromagnets are provided, to press the belt drive against the side wall. Using the side wall as a means to propel the robot forward is beneficial, because no obstacles like metal filings, other tools, or further obstructions can be encountered on the side wall.

However, in order for such robots to achieve their desired function of automatically torquing the different bolts of the flanged connection to a specific torque, and therefore achieve a defined clamping force in the flanged connection, the robot has to automatically grip and manipulate the different bolts of the bolt connection. The bolts have therefore to be prearranged in the flanged connection in a specific position. In detail, the upper bolt ends of the different bolts have to be aligned within a certain tolerance range at a level above the flanged connection in order for the robot to function properly.

This alignment of bolts has previously been checked manually, for example by manually measuring the height of the bolts protruding above the flanged connection. This process however is very labor intensive and time consuming, as well as prone to measurement errors. If for example one bolt is not placed properly, the process of tightening the bolts with the robot may not be performed adequately or at all, requiring further user interaction in the bolt tightening process. Furthermore, for purposes of quality control, it is desirable to document the different steps of the tightening process, including the proper bolt alignment.

The technical problem of the present invention is therefore to provide a method of detecting a position of at least one bolt end of at least one bolt of a series of bolts arranged in a linear or curved flanged connection, wherein the bolt ends are protruding beyond the flanged connection, with a camera which is movable along the flanged connection, which enables the automatic detection of the correct placement of the bolts.

Prior art SUN JUNHUA ET AL: "A Fast Bolt-Loosening Detection Method of Running Train's Key Components Based an Binocular Vision", XP011716066 and prior art XIE YANXIA ET AL: "On-line bolt-loosening detection method of key components of running trains using binocular vision", XP060098587 disclose a method of detecting a position of at least one bolt end of at least one bolt of a series of bolts arranged in a linear or curved flanged connection with a camera. Problem is that these methods do not enable to verify and document the tightening process.

This problem is solved by the provision of a method of detecting a position of at least one bolt end of at least one bolt of a series of bolts according to the subject matter of claim 1, and a tightening device for tightening a series of nuts pre-screwed on bolts according to the subject matter of claim 5.

The method of detecting a position of at least one bolt end of at least one bolt of a series of bolts arranged in a linear or curved flanged connection, wherein the bolt ends of the bolts arranged in the flanged connection are protruding beyond the flanged connection, with a camera which is movable along the flanged connection according to the invention comprises a series of steps. These steps include defining a first bolt end level at a first distance from the flanged connection and defining a first tolerance range surrounding the first bolt end level.

Additionally, the method according to the invention includes detecting the position of the bolt end of the at least one bolt arranged in the flanged connection with the camera and determining whether the position of the bolt end of the at least one bolt is located within the first tolerance range surrounding the first bolt end level. By implementing the method according to the invention, a position of at least one bolt within the flanged connection is verified using the camera. It is checked if the bold protrudes by a predefined distance over the flanged connection by comparing the position of the bolt end of the bolt with a predefined first bolt end level. An advantage of the method according to the invention consists therein that the position of the bolt can be verified and saved for quality control purposes.

Furthermore, it is therefore guaranteed, that a bolt tightening device, be it manually operated or automatically operated, can grip the bolt and perform a desired bolt tensioning operation after the position of the bolt has been verified with the method according to the invention.

According to a preferred embodiment of the method according to the invention, the camera is moved along the flanged connection, and the position of the bolt end of each bolt of the flanged connection is detected with the camera, and for each bolt of the flanged connection it is determined, whether the position of the bolt end of the respective bolt is located within the first tolerance range surrounding the first bolt end level. This leads to the advantage, that the bolts arranged in the flanged connection can be tightened in series and rapidly, for example by employing a bolt tightening robot.

The method according to the invention also includes elongating at least one bolt of the flanged connection by applying a force on the bolt in an axial direction of the bolt, tightening a lock nut threaded onto the bolt while applying the force on the bolt and releasing the force on the bolt. This constitutes the bolt tightening procedure using a bolt elongation process. In order to verify the results of the bolt tightening procedure, the method according to the invention further includes defining a second bolt end level at a second distance from the flanged connection, wherein the second distance is greater than the first distance, defining a second tolerance range surrounding the second bolt end level and after elongating the bolt, tightening the lock nut and releasing the force on the bolt, detecting the position of the bolt end of the bolt with the camera. Additionally, the method according to the invention includes determining whether the position of the bolt end is located within the second tolerance range surrounding the second bolt end level. By verifying the result of the bolt elongation process in this manner, a dependable documentation of the bolt elongation and tightening procedure can be generated.

Preferably, each bolt of the flanged connection is elongated by applying a force on each bolt in an axial direction of the bolts. This is preferably followed by tightening a lock nut threaded onto each bolt while applying the force on the respective bolt and releasing the force on the respective bolt. Therefore, each bolt of the flanged connection is tightened, ensuring a rigid connection and an equal distribution of clamping force along the flanged connection. According to the preferred embodiment of the method according to the invention, the camera is moved along the flanged connection, and it is determined with the camera if the position of the bolt ends of each of the bolts is located within the second tolerance range surrounding the second bolt end level, after the respective bolt has been elongated, the lock nut tightened, and the force acting on the bolt released. Therefore, the result of the elongation and tightening process can be verified using the method according to the invention for each of the bolts of the flanged connection.

The technical problem of the invention is also solved by the provision of a tightening device for tightening a series of lock nuts pre-screwed on bolts, which bolts are arranged in a linear or in a curved flanged connection, comprising a camera, and a computing unit connected to the camera. The computing unit is configured to execute the method according to the invention.

According to a preferred embodiment of the tightening device according to the invention, the tightening device comprises a propulsion unit for moving the tightening device along the flanged connection. This enables the tightening device to automatically verify the positioning of each of the bolts prior to the tightening operation, and to verify the result of the tightening operation for each of the bolts.

The tightening device preferably also comprises a lock nut tightening unit for tightening the lock nuts screwed onto the bolts, and two propulsion units disposed on essentially opposite sides of the lock nut tightening unit.

The method and the tightening device according to the invention as well as preferred and alternative embodiments will be described hereinbelow with reference to the figures.
Figure 1 shows a series of three bolts with lock nuts, wherein the bolts comprise bolt ends arranged at different heights.
Figure 2a shows a bolt with a lock nut.
Figure 2b shows the bolt of figure 1a after it has been elongated, and the lock nut tightened.
Figure 3 shows a perspective view of a tightening device according to the invention
Figure 4 shows a cross-section of the tightening device according to figure 3.

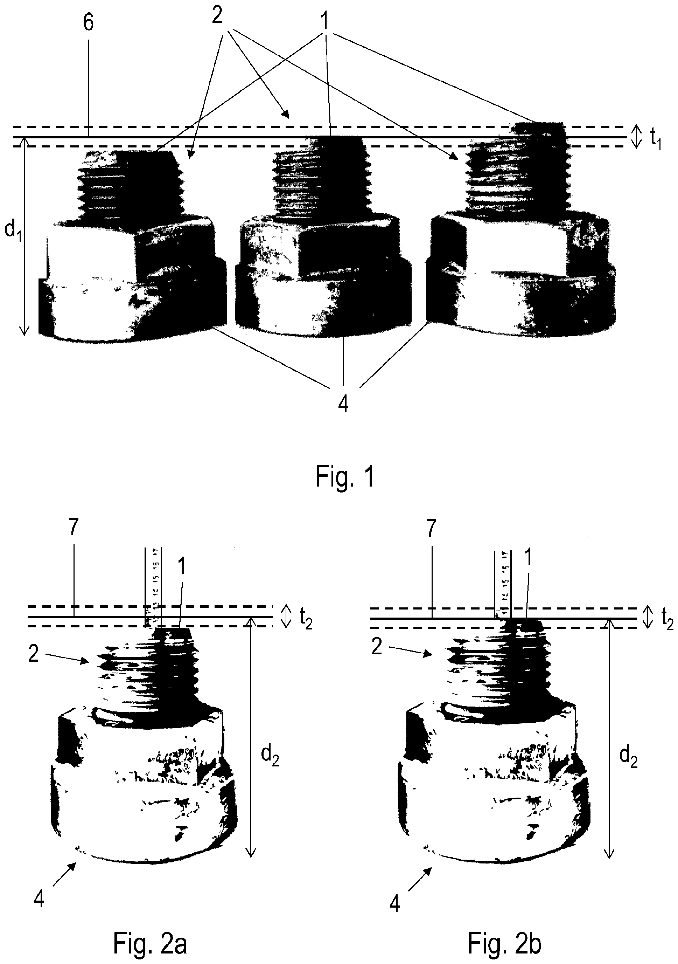

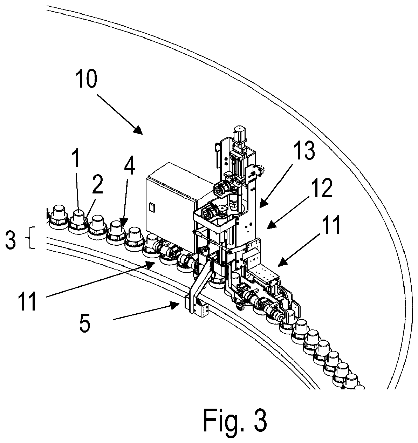

The method of detecting a position of at least one bolt end 1 of at least one bolt 2 of a series of bolts 2 arranged in a linear or curved flanged connection 3 is hereinbelow described using Figures 1, 2a and 2b. The three bolts 2 depicted in figure 1 each comprise a bolt end 1, and a lock nut 4 is screwed on each bolt 2. The bolts 2 are arranged in the linear or curved flanged connection 3, which is not shown in figure 1, but can be seen in figure 3. The lock nuts 4 in figure 1 have not been tightened, and the bolt ends 1 rest at different heights, which leads to different thread lengths which are protruding above the lock nuts 4 and therefore the flanged connection 3, against which the lock nuts 4 abut. The method according to the invention utilizes a camera 5, which is moveable along the flanged connection 3, and which is also not shown in figure 1, but can be seen in figure 3. The method according to the invention comprises the steps of defining a first bolt end level 6 at a first distance d₁ from the flanged connection 3 and defining a first tolerance range ti surrounding the first bolt end level 6. The first bolt end level 6 and the first tolerance range ti surrounding the first bolt end level 6 are shown in figure 1, as well as the first distance d₁. As can be seen, in figure 1, the bolt end 1 of the bolt 2 in the middle is correctly positioned within the tolerance range ti surrounding the first bolt end level 6, whereas the bolt end 1 of the left bolt 2 is positioned too low, and the bolt end 1 of the right bolt 2 is positioned too high. The position of the bolt end 1 of the at least one bolt 2 arranged in the flanged connection 3 is detected with the camera 5 in the method according to the invention. At last, it is determined, whether the position of the bolt end 1 of the at least one bolt 2 is located within the first tolerance range ti surrounding the first bolt end level 6. In figure 1 only the center bolt 2 is positioned correctly. By employing this method, an easy and simple automated validation of the positions of the bolts 3 can be provided. The image generated by the camera 5, or data about the correct or incorrect placement of the bolts 2 can for example be saved in a memory unit connected to the camera 5. The analysis and determination whether the position of the bolt end 1 of the at least one bolt 2 is located within the first tolerance range ti surrounding the first bolt end level 6 can be performed by a computing unit connected to the camera 5, which may also comprise the memory unit, by employing image analysis methods like contrast analysis. The data about the correct placement of the bolt 2 can be stored for example for quality control purposes. Also, if the method according to the invention leads to the determination, that at least one bolt 2 within the flanged connection 3 is placed incorrectly, actions to correct the bolt 2 placement can be taken. Preferably, in the method according to the invention the camera 5 is moved along the flanged connection 3, and the position of the bolt end 1 of each bolt 2 of the flanged connection 3 is detected with the camera 5, and for each bolt 2 of the flanged connection 3 it is determined, whether the position of the bolt end 1 of the respective bolt 2 is located within the first tolerance range ti surrounding the first bolt end level 6. An advantage of the method according to the invention consists therein, that a time-consuming manual measurement of the length of the bolts 2 protruding from the flanged connection 3 is not necessary.

After the position of the bolt 2 has been validated as described above, the method according to the invention includes elongating at least one bolt 2 of the flanged connection 3 by applying a force on the bolt 2 in an axial direction of the bolt 2 and tightening the lock nut 4 threaded onto the bolt 2 while applying the force on the bolt 2. Finally, the method according to the invention includes the step of releasing the force acting on the bolt 2. Figure 2a shows a bolt 2 with its lock nut 4 before the elongation and tightening process as described above. Figure 2b shows the bolt 2 after the lock nut 4 has been tightened, and the force acting on the bolt 2 has been released. This leads to a clearly defined torque by which the lock nut 4 is fastened and a precisely defined clamping force acting on the flanged connection 3.

Furthermore, according to the method according to the invention, the method comprises defining a second bolt end level 7 at a second distance d₂ from the flanged connection 3, wherein the second distance d₂ is greater than the first distance d₁ and defining a second tolerance range t₂ surrounding the second bolt end level 7. After elongating the bolt 2, the lock nut 4 is tightened, the force acting on the bolt 2 is released, and the position of the bolt end 1 of the bolt 2 is detected with the camera 5. Typically, the difference between the first distance d₁ and the second distance d₂ is about 1mm, but is generally dependent on bolt material and dimensions. Finally, it is determined whether the position of the bolt end 1 is located within the second tolerance range t₂ surrounding the second bolt end level 7. In Figure 2b it can be seen, that the bolt end 1 of the bolt 2 is located within the second tolerance range t₂. As described above with regards to the positioning of the bolt 2 before the elongation and tightening process, the final result of the elongation and tightening process can be recorded and validated using the method according to the invention preferably by employing a computing unit connected to the camera 5, which is programmed to execute the method according to the invention. The results may be recorded on a memory device, which is connected to or part of the computing unit. Typically, the camera 5 records images at a resolution of 4000 x 4000 pixels, with a picture height of about 15 cm. One pixel may correspond to 0.0375 mm, meaning that 1 mm bolt elongation corresponds to 26-27 pixels.

Preferably, each bolt 2 of the flanged connection 3 is elongated by applying a force on each bolt 2 in an axial direction of the bolts 2, and the lock nut 4 threaded onto each bolt 2 is tightened while applying the force on the respective bolt 2 before releasing the force on the respective bolt 2. Hereby all lock nuts 4 of the bolts 2 of the flanged connection 3 are tightened with the correct torque value. Furthermore, according to the preferred embodiment of the method according to the invention, the camera 5 is moved along the flanged connection 3 and it is determined with the camera 5 if the position of the bolt ends 1 of each of the bolts 2 is located within the second tolerance range t₂ surrounding the second bolt end level 7, after the respective bolt 2 has been elongated, the lock nut 4 tightened, and the force acting on the bolt 2 released.

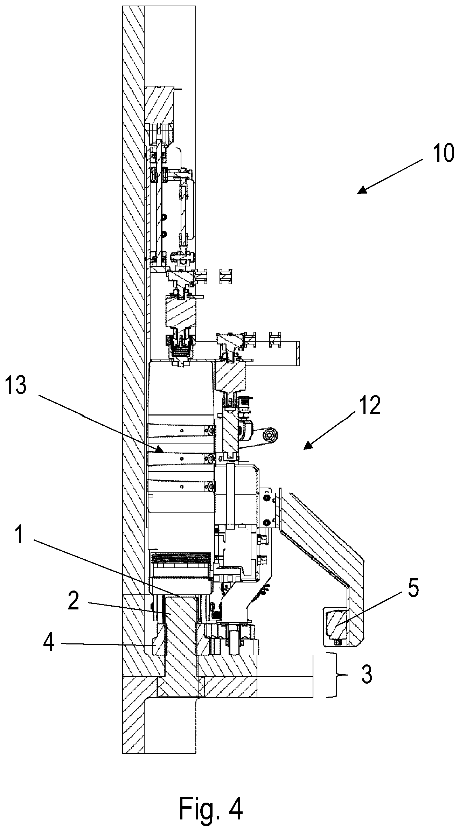

The tightening device 10 according to the invention for tightening a series of lock nuts 4 pre-screwed on bolts 2, which bolts 2 are arranged in a linear or in a curved flanged connection 3 is shown in figure 3 and figure 4, and comprises the camera 5, and the computing unit connected to the camera 5, which computing unit is configured to execute the method according to the invention. As described with regards to the method, the computing unit may comprise or be connected to a memory unit. The tightening device 10 according to the invention may also comprise, according to a preferred embodiment, a propulsion unit 11 for moving the tightening device 10 along the flanged connection 3. This enables the tightening device 10 to automatically verify the positioning of each of the bolts 2 prior to the tightening operation, and to verify the result of the tightening operation for each of the bolts 2. Preferably, the tightening device 10 according to the invention also comprises a lock nut tightening unit 12 for tightening the lock nuts 4 screwed onto the bolts 2, and two propulsion units 11 disposed on essentially opposite sides of the lock nut tightening unit 12. Furthermore, the tightening device 10 may also comprise a bolt elongation unit 13 for applying a force on the bolts 2 in the axial direction of the bolts 2.

## Claims

1. Method of detecting a position of at least one bolt end (1) of at least one bolt (2) of a series of bolts (2) arranged in a linear or curved flanged connection (3), wherein the bolt ends (1) of the bolts (2) arranged in the flanged connection (3) are protruding beyond the flanged connection (3), with a camera (5) which is movable along the flanged connection (3), the method comprising the steps of:
Defining a first bolt end level (6) at a first distance (d₁) from the flanged connection (3);
defining a first tolerance range (t₁) surrounding the first bolt end level (6);
Detecting the position of the bolt end (1) of the at least one bolt (2) arranged in the flanged connection (3) with the camera (5);
determining whether the position of the bolt end (1) of the at least one bolt (2) is located within the first tolerance range (t₁) surrounding the first bolt end level (6); and **characterised by**
Elongating at least one bolt (2) of the flanged connection (3) by applying a force on the bolt (2) in an axial direction of the bolt (2);
Tightening a lock nut (4) threaded onto the bolt (2) while applying the force on the bolt (2);
Releasing the force on the bolt (2);
Defining a second bolt end level (7) at a second distance (d₂) from the flanged connection (3),
wherein the second distance (d₂) is greater than the first distance (d₁);
Defining a second tolerance range (t₂) surrounding the second bolt end level (7);
After elongating the bolt (2), tightening the lock nut (4) and releasing the force on bolt (2),
detecting the position of the bolt end (1) of the bolt (2) with the camera (5);
Determining whether the position of the bolt end (1) is located within the second tolerance range (t₂) surrounding the second bolt end level (7).

2. Method according to claim 1, wherein the camera (5) is moved along the flanged connection (3), and the position of the bolt end (1) of each bolt (2) of the flanged connection (3) is detected with the camera (5), and for each bolt (2) of the flanged connection (3) it is determined, whether the position of the bolt end (1) of the respective bolt (2) is located within the tolerance range (t₁) surrounding the first bolt end level (6).

3. Method according to claim 1, comprising the steps of:
Elongating each bolt (2) of the flanged connection (3) by applying a force on each bolt (2) in an axial direction of the bolts (2);
Tightening a lock nut (4) threaded onto each bolt (2) while applying the force on the respective bolt (2);
Releasing the force on the respective bolt (2);

4. Method according to claim 3, wherein the camera (5) is moved along the flanged connection (3) and it is determined with the camera (5) if the position of the bolt ends (1) of each of the bolts (2) is located within the second tolerance range (t₂) surrounding the second bolt end level (7), after the respective bolt (2) has been elongated, the lock nut (4) tightened, and the force acting on the bolt (2) released.

5. Tightening device (10) for tightening a series of lock nuts (4) pre-screwed on bolts (2), which bolts (2) are arranged in a linear or in a curved flanged connection (3), comprising a camera (5), and a computing unit connected to the camera (5), **characterized in that** the computing unit (5) is configured to execute a method according to any of claims 1 to 4.

6. Tightening device (10) according to claim 5, **characterized in that**, the tightening device (10) comprises a propulsion unit (11) for moving the tightening device (10) along the flanged connection (3).

7. Tightening device (10) according to any of claims 5 or 6, **characterized in that**, the tightening device (1) comprises a lock nut tightening unit (12) for tightening the lock nuts (4) screwed onto the bolts (2), and two propulsion units (11) disposed on essentially opposite sides of the lock nut tightening unit (15).

## Patentansprüche

1. Verfahren zum Erfassen einer Position mindestens eines Bolzenendes (1) mindestens eines Bolzens (2) einer Reihe von in einer geradlinigen oder gekrümmten Flanschverbindung (3) angeordneten Bolzen (2), wobei die Bolzenenden (1) der in der Flanschverbindung (3) angeordneten Bolzen (2) über die Flanschverbindung (3) hinausragen, mit einer Kamera (5), die entlang der Flanschverbindung (3) bewegbar ist,
das Verfahren umfassend die folgenden Schritte:
Festlegen einer ersten Bolzenendebene (6) in einem ersten Abstand (d₁) von der Flanschverbindung (3);
Festlegung eines ersten Toleranzbereichs (t₁), der die erste Schraubenendhöhe (6) umgibt;
Erfassen der Position des Bolzenendes (1) des mindestens einen in der Flanschverbindung (3) angeordneten Bolzens (2) mit der Kamera (5);
Bestimmen, ob sich die Position des Bolzenendes (1) des mindestens einen Bolzens (2) innerhalb des ersten Toleranzbereichs (t₁) befindet, der die erste Bolzenendebene (6) umgibt; und **gekennzeichnet durch**:
Verlängern mindestens eines Bolzens (2) der Flanschverbindung (3) durch Aufbringen einer Kraft auf den Bolzen (2) in einer axialen Richtung des Bolzens (2);
Anziehen einer auf den Bolzen (2) aufgeschraubten Kontermutter (4) unter Aufbringung der Kraft auf den Bolzen (2);
Lösen der Kraft auf den Bolzen (2);
Festlegen einer zweiten Bolzenendebene (7) in einem zweiten Abstand (d₂) von der Flanschverbindung (3), wobei der zweite Abstand (d₂) größer ist als der erste Abstand (d₁);
Festlegen eines zweiten Toleranzbereichs (t₂), der die zweite Bolzenendebene (7) umgibt;
Nach dem Verlängern des Bolzens (2), dem Anziehen der Kontermutter (4) und dem Lösen der Kraft auf den Bolzen (2) wird die Position des Bolzenendes (1) des Bolzens (2) mit der Kamera (5) erfasst;
Bestimmung, ob die Position des Bolzenendes (1) innerhalb des zweiten Toleranzbereichs (t₂) liegt, der die zweite Bolzenendebene (7) umgibt.

2. Verfahren nach Anspruch 1, wobei die Kamera (5) entlang der Flanschverbindung (3) bewegt wird und die Position des Bolzenendes (1) jedes Bolzens (2) der Flanschverbindung (3) mit der Kamera (5) erfasst wird und für jeden Bolzen (2) der Flanschverbindung (3) ermittelt wird, ob sich die Position des Bolzenendes (1) des jeweiligen Bolzens (2) innerhalb des die erste Bolzenendebene (6) umgebenden Toleranzbereichs (t₁) befindet.

3. Verfahren nach Anspruch 1, das die folgenden Schritte umfasst:
Verlängern jedes Bolzens (2) der Flanschverbindung (3) durch Aufbringen einer Kraft auf jeden Bolzen (2) in einer axialen Richtung der Bolzen (2);
Anziehen einer auf jeden Bolzen (2) aufgeschraubten Kontermutter (4) unter Aufbringung der Kraft auf den jeweiligen Bolzen (2);
Lösen der Kraft auf den jeweiligen Bolzen (2);

4. Verfahren nach Anspruch 3, wobei die Kamera (5) entlang der Flanschverbindung (3) bewegt wird und mit der Kamera (5) ermittelt wird, ob sich die Position der Bolzenenden (1) jedes der Bolzen (2) innerhalb des zweiten Toleranzbereichs (t₂) um die zweite Bolzenendebene (7) befindet, nachdem der jeweilige Bolzen (2) gedehnt, die Kontermutter (4) angezogen und die auf den Bolzen (2) wirkende Kraft gelöst wurde.

5. Anziehvorrichtung (10) zum Anziehen einer Reihe von auf Bolzen (2) vorgeschraubten Kontermuttern (4), wobei die Bolzen (2) in einer geradlinigen oder in einer gekrümmten Flanschverbindung (3) angeordnet sind, mit einer Kamera (5) und einer mit der Kamera (5) verbundenen Recheneinheit, **dadurch gekennzeichnet, dass** die Recheneinheit (5) zur Ausführung eines Verfahrens nach einem der Ansprüche 1 bis 4 ausgebildet ist.

6. Festziehvorrichtung (10) nach Anspruch 5, **dadurch gekennzeichnet, dass** die Festziehvorrichtung (10) eine Antriebseinheit (11) zum Bewegen der Festziehvorrichtung (10) entlang der Flanschverbindung (3) umfasst.

7. Festziehvorrichtung (10) nach einem der Ansprüche 5 oder 6, **dadurch gekennzeichnet, dass** die Spannvorrichtung (1) eine Kontermutter-Anzieheinheit (12) zum Anziehen der auf die Bolzen (2) geschraubten Kontermuttern (4) und zwei Antriebseinheiten (11) umfasst, die auf im Wesentlichen gegenüberliegenden Seiten der Kontermutter-Anzieheinheit (15) angeordnet sind.

## Revendications

1. Procédé de détection d'une position d'au moins une extrémité de boulon (1) d'au moins un boulon (2) d'une série de boulons (2) agencé dans un raccordement à bride linéaire ou incurvé (3), dans lequel les extrémités de boulon (1) des boulons (2) agencés dans le raccordement à bride (3) font saillie au-delà du raccordement à bride (3), avec une caméra (5) qui est mobile le long du raccordement à bride (3), le procédé comprenant les étapes consistant à :
définir un premier niveau d'extrémité de boulon (6) au niveau d'une première distance (d₁) du raccordement à bride (3) ;
définir une première plage de tolérance (t₁) entourant le premier niveau d'extrémité de boulon (6) ;
détecter la position de l'extrémité de boulon (1) du au moins un boulon (2) agencé dans le raccordement à bride (3) avec la caméra (5) ;
déterminer si la position de l'extrémité de boulon (1) du au moins un boulon (2) est située dans la première plage de tolérance (t₁) entourant le premier niveau d'extrémité de boulon (6) ; et **caractérisé par** les étapes consistant à
allonger au moins un boulon (2) du raccordement à bride (3) en appliquant une force sur le boulon (2) dans une direction axiale du boulon (2) ;
serrer un écrou de verrouillage (4) vissé sur le boulon (2) tout en appliquant la force sur le boulon (2) ;
relâcher la force exercée sur le boulon (2) ;
définir un second niveau d'extrémité de boulon (7) à une seconde distance (d₂) du raccordement à bride (3), dans lequel la seconde distance (d₂) est supérieure à la première distance (d₁) ;
définir une seconde plage de tolérance (t₂) entourant le second niveau d'extrémité de boulon (7) ;
après avoir allongé le boulon (2), serré l'écrou de verrouillage (4) et relâcher la force exercée sur le boulon (2), détecter la position de l'extrémité du boulon (1) du boulon (2) avec la caméra (5) ;
déterminer si la position de l'extrémité de boulon (1) est située dans la seconde plage de tolérance (t₂) entourant le second niveau d'extrémité de boulon (7).

2. Procédé selon la revendication 1, dans lequel la caméra (5) est déplacée le long du raccordement à bride (3), et la position de l'extrémité de boulon (1) de chaque boulon (2) du raccordement à bride (3) est détectée avec la caméra (5), et pour chaque boulon (2) du raccordement à bride (3), il est déterminé si la position de l'extrémité de boulon (1) du boulon respectif (2) est située dans la plage de tolérance (t₁) entourant le premier niveau d'extrémité de boulon (6).

3. Procédé selon la revendication 1, comprenant les étapes consistant à :
allonger chaque boulon (2) du raccordement à bride (3) en appliquant une force sur chaque boulon (2) dans une direction axiale des boulons (2) ;
serrer un écrou de verrouillage (4) vissé sur chaque boulon (2) tout en appliquant la force sur le boulon (2) respectif ;
relâcher la force exercée sur le boulon respectif (2) ;

4. Procédé selon la revendication 3, dans lequel la caméra (5) est déplacée le long du raccordement à bride (3) et il est déterminé à l'aide de la caméra (5) si la position des extrémités de boulon (1) de chacun des boulons (2) est située dans la seconde plage de tolérance (t₂) entourant le second niveau d'extrémité de boulon (7), après que le boulon respectif (2) a été allongé, l'écrou de verrouillage (4) étant serré, et la force agissant sur le boulon (2) étant libérée.

5. Dispositif de serrage (10) pour serrer une série d'écrous de verrouillages (4) vissés préalablement sur des boulons (2), lesquels boulons (2) sont agencés dans un raccordement à bride linéaire ou incurvé (3), comprenant une caméra (5) et une unité de calcul connectée à la caméra (5), **caractérisé en ce que** l'unité de calcul (5) est configurée pour exécuter un procédé selon l'une quelconque des revendications 1 à 4.

6. Dispositif de serrage (10) selon la revendication 5, **caractérisé en ce que** le dispositif de serrage (10) comprend une unité de propulsion (11) pour déplacer le dispositif de serrage (10) le long du raccordement à bride (3).

7. Dispositif de serrage (10) selon l'une quelconque des revendications 5 ou 6, **caractérisé en ce que** le dispositif de serrage (1) comprend une unité de serrage d'écrou de verrouillage (12) pour serrer les écrou de verrouillages (4) vissés sur les boulons (2), et deux unités de propulsion (11) disposées sur des côtés essentiellement opposés de l'unité de serrage d'écrou de verrouillages (15).
